# EUROPÄISCHE PATENTSCHRIFT

(11) **EP 1 735 542 B1**
(45) Veröffentlichungstag und Bekanntmachung des Hinweises auf die Patenterteilung: **19.11.2008**
(21) Anmeldenummer: 05760745.9
(22) Anmeldetag: 15.04.2005
(51) Int. Cl.: F16F 15/00, F16F 15/073

(54) **SCHNITTSTELLE MIT SCHUBABLEITUNG ZUM DÄMPFEN MECHANISCHER SCHWINGUNGEN**
PUSHING FORCE DEVIATING INTERFACE FOR DAMPING MECHANICAL VIBRATIONS
INTERFACE A DISSIPATION DES FORCES DE CISAILLEMENT, DESTINEE A AMORTIR LES VIBRATIONS MECANIQUES

(30) Priorität: 16.04.2004 DE 102004019242
(43) Veröffentlichungstag der Anmeldung: 27.12.2006
(73) Patentinhaber: Fraunhofer-Gesellschaft zur Förderung der angewandten Forschung e.V., 80686 München (DE)
(72) Erfinder: MELZ, Tobias, 64285 Darmstadt (DE); MATTHIAS, Michael, 64285 Darmstadt (DE); HANSELKA, Holger, 64297 Darmstadt (DE)
(74) Vertreter: Köllner, Malte
(86) Internationale Anmeldenummer: PCT/EP2005/004021
(87) Internationale Veröffentlichungsnummer: WO 2005/100816

(56) Entgegenhaltungen:
- EP-A- 0 384 947
- EP-A- 0 756 103
- WO-A-20/05010399
- DE-A1- 19 610 692
- DE-A1- 19 925 982
- GB-A- 2 222 657
- US-A- 4 499 772
- US-A- 5 927 699

## Beschreibung

Die Erfindung betrifft eine Vorrichtung zum Kontrollieren, insbesondere zum Dämpfen bzw. Reduzieren, mechanischer Schwingungen mittels einem oder mehrerer Energiewandlersysteme. Derartige Schnittstellen dienen beispielsweise zum Dämpfen von Schwingungen im Bereich des allgemeinen Maschinenbaus, der Automobiltechnik, des Bauingenieurwesens oder der Luft- und Raumfahrttechnik.

In Maschinen, Fahrzeugen und ähnlichen Baugruppen entstehen, z. B. durch den Betrieb von Aggregaten (beispielsweise Aggregaten zur Stromerzeugung) oder durch sonstige Umgebungsbedingungen erregte, dynamische mechanische Störungen in Form von Schwingungen. Die Frequenzen dieser Schwingungen reichen bis in den höherfrequenten struktur-akustischen Bereich und bewirken lokal am Ort der Störentstehung bzw. der Störeinleitung oder, nach Übertragung über mechanische Lastpfade, weiter entfernt unerwünschte dynamische und/oder akustische Effekte. In der Folge ergeben sich Komforteinbußen, Sicherheitsprobleme, Bauteilschädigungen infolge von struktureller Ermüdung, verminderte Lebensdauer, reduzierte Funktionalitäten, etc.

### Stand der Technik

Zum Kontrollieren (z. B. Dämpfen oder Isolieren) mechanischer Schwingungen wird häufig die sogenannte Materialdämpfung eingesetzt, bei der die mechanische Energie der Schwingung unmittelbar in thermische Energie umgesetzt wird. Beispiele hierfür sind elastische oder viskoelastische Dämpfungssysteme.

Daneben werden zunehmend Maßnahmen eingesetzt, die auf weiteren Energiewandlersystemen beruhen. Diese Energiewandlersysteme wandeln i. d. R. mechanische in elektrische Energie um und umgekehrt. Beide Effekte werden für die Kontrolle (insbesondere für die Dämpfung) mechanischer Schwingungen eingesetzt. Man unterscheidet dabei in der Regel zwischen aktiven, semi-aktiven bzw. semi-passiven und passiven Systemen.

Bei der passiven und semi-aktiven bzw. semi-passiven Schwingungskontrolle wird die mechanische Energie der Schwingungen mit Hilfe eines elektrisch-mechanischen Energiewandlers (z. B. einer Piezokeramik) zunächst in elektrische Energie umgewandelt. Diese elektrische Energie wird dann im Fall der passiven Schwingungsdämpfung in einer passiven elektrischen Schaltung (z. B. einem ohmschen Widerstand) dissipiert, d. h. in thermische Energie umgewandelt, bzw. im Fall der semi-aktiven bzw. semi-passiven Schwingungsdämpfung mit Hilfe einer eine externe elektrische Hilfsenergiequelle aufweisenden elektrischen Schaltung umgeleitet (z. B. elektrischer Tilger). Derartige Systeme werden beispielsweise in N.W. Hagood und A. von Flotow: *Damping of Structural Vibrations with Piezoelectric Materials and Passive Electrical Networks,* Journal of Sound and Vibration 146 (2), 243 (1991), beschrieben.

Bei der aktiven Schwingungskontrolle wird zwischen eine Störquelle (Basisseite) und eine Anschlussseite mindestens ein Aktuator-System geschaltet. Als "Aktuator" wird in diesem Zusammenhang ein Energiewandler bezeichnet, welcher z. B. elektrische Signale in mechanische Bewegungen umwandeln kann, beispielsweise ein piezoelektrischer Aktuator, ein magnetostriktiver Aktuator oder auch ein konventioneller pneumatischer Aktuator. Entscheidend ist, dass die Charakteristik (z. B. Ausdehnung) der Aktuatoren durch ein Ansteuersignal kontrolliert veränderbar ist. Ein Beispiel für ein System zur aktiven Schwingungskontrolle mit Hilfe von Aktuator-Elementen ist in der US 5,660,255 offenbart. Zwischen ein Basisgehäuse und eine zu isolierende Nutzlast werden Aktuator-Elemente, sowie eine kleine zusätzliche Masse eingebracht. Auf der kleinen Masse sind Sensoren angebracht, welche die Verschiebung der kleinen Masse registrieren. Aus der Verschiebung wird mit Hilfe einer elektronischen Regelung und einer externen elektrischen Energiequelle ein Stellsignal für die Aktuator-Elemente generiert. Die Aktuator-Elemente werden so angesteuert, dass die Schwingungsbewegung am Ort der Nutzlast weitgehend eliminiert wird.

Neben der Nützung zur aktiven, passiven und semi-aktiven bzw. semi-passiven Schwingungskontrolle können die elektrisch-mechanischen Energiewandler oft auch gleichzeitig als Stellglieder zur mechanischen Positionierung einer Nutzlast genutzt werden. Dies kann beispielsweise dadurch erfolgen, dass eine ringförmige Anordnung einer Mehrzahl von Aktuatoren in eine schwingungsreduzierende Schnittstelle integriert wird, welche z. B. eine gezielte Verkippung einer Struktur gegenüber einer Basis bewirken kann. Ein derartiges System wird beispielsweise in DE 195 27 514 C2 offenbart.

Aus konstruktiven bzw. strukturmechanischen Gründen werden Aktuator-Systeme in der Praxis häufig mit einer Vorlast betrieben, die eine Schädigung vermeiden soll. Häufig handelt es sich dabei um eine mechanische Vorlast in Form einer Druck- oder Zugbelastung auf das Aktuator-System. Bei piezoelektrischen Aktuatoren beispielsweise, bei denen eine Ausdehnung über die Ruhelänge (d. h. Länge des Aktuators ohne beaufschlagte elektrische Spannung) hinaus zu mechanischen Beschädigungen des Aktuators führen würde, ist ein Betrieb ohne Vorspannung praktisch nicht sinnvoll bzw. nicht möglich. Die konstruktive Realisierung einer Vorrichtung zum Ausüben einer Vorspannung stellt jedoch insbesondere bei dem bzw. den Aktuatoren ein Problem dar, deren Ausdehnungsrichtung sich parallel zu der von der Nutzlast ausgeübten Kraft (beispielsweise der Gewichtskraft) erstreckt und somit eine häufig negative Auswirkung auf die aktuatorische Wirksamkeit hat. In US 5,660,255 ist keine befriedigende Lösung dieses Problems offenbart.

In DE 195 27 514 C2 wird eine Schnittstelle zur Schwingungsreduktion in strukturdynamischen Systemen offenbart, bei der eine Schwingungsisolation zwischen einem strukturseitigen Bauteil und einem basisseitigen Bauteil durch eine Mehrzahl von eine Hauptrichtung aufweisenden Aktuatoren erfolgt. Eine Druckvorspannung auf die Aktuatoren wird durch Dehnschrauben zwischen dem basisseitigen Bauteil und dem strukturseitigen Bauteil gewährleistet.

Eine derartige starre mechanische Verbindung zwischen dem basisseitigen Bauteil und dem strukturseitigen Bauteil hat jedoch den Nachteil, dass dadurch eine Brücke geschaffen wird, über die sich Schwingungen von einer basisseitigen Störquelle zum strukturseitigen Bauteil ausbreiten können. Außerdem sind die Aktuatoren nur unzureichend gegen Querbelastungen senkrecht zu ihrer Hauptrichtung (Schub) geschützt. Dies kann leicht zu Beschädigungen der empfindlichen Aktuatoren führen. Zudem bedeutet diese Lösung eine Beeinflussung, zumeist eine Verminderung, der Aktuatorwirksamkeit infolge eines steifigkeitsbedingten Dehnungsverlusts.

### Aufgabe

Aufgabe der Erfindung ist es, eine verbesserte Vorrichtung zur Kontrolle, insbesondere zum Dämpfen, mechanischer Schwingungen mittels einem oder mehrerer Energiewandlersysteme anzugeben. Dabei sollen die Energiewandlersysteme eine Vorzugsrichtung aufweisen und so eingesetzt werden, dass sie gegen mechanische Belastungen außerhalb der aktuatorischen Vorzugsrichtung, insbesondere senkrecht zu dieser Vorzugsrichtung, geschützt sind.

### Lösung

Diese Aufgabe wird durch die Erfindung mit den Merkmalen des unabhängigen Anspruchs gelöst. Vorteilhafte Weiterbildungen der Erfindung sind in den Unteransprüchen gekennzeichnet.

Es wird eine Schnittstelle zur Kontrolle, insbesondere zum Dämpfen, mechanischer Schwingungen vorgeschlagen, welche ein Basisanschlusselement, ein Lastanschlusselement, sowie mindestens ein Energiewandlersystem aufweist. Das Energiewandlersystem erstreckt sich zwischen dem Basisanschlusselement und dem Lastanschlusselement und weist eine Vorzugsrichtung auf.

Weiterhin erstrecken sich zwischen dem Basisanschlusselement und dem Lastanschlusselement mindestens ein Vorspannelement und ein Schubableitungselement. Das Vorspannelement übt eine mechanische Vorlast auf das Energiewandlersystem aus. Das Schubableitungselement weist ein im wesentlichen rechtwinklig zur Vorzugsrichtung angeordnetes zweidimensionales Element, insbesondere eine Membran oder Blattfeder, auf. Das Basisanschlusselement ist über mindestens eine erste Verbindung mit mindestens einem ersten Angriffsbereich auf dem zweidimensionalen Element verbunden. Das Lastanschlusselement ist über mindestens eine zweite Verbindung mit mindestens einem zweiten Angriffsbereich auf dem zweidimensionalen Element verbunden. Die Angriffsbereiche des Basisanschlusselements und des Lastanschlusselements sollen nicht zusammenfallen.

Unter einer Schnittstelle ist dabei ein Modul zu verstehen, welches sich ohne größeren konstruktiven Aufwand beispielsweise in Lastpfade von Maschinen, Fahrzeugen und ähnlichen Baugruppen integrieren lässt. Die Schnittstelle kann
- als Lagerungselement,
- als modulares Übertragungselement und/oder
- als Stellelement
in mechanische Strukturen eingearbeitet werden.

Zu diesem Zweck können beispielsweise das Lastanschlusselement und das Basisanschlusselement mit Standardvorrichtungen (beispielsweise Innen- und/oder Außengewinden, Flanschen etc.) zum Anschließen weiterer Elemente versehen sein. Die Schnittstelle dient dazu, basisseitige Störquellen von lastseitig angeschlossenen Elementen zu isolieren.

Unter einem Energiewandlersystem wird dabei ein System verstanden, welches mindestens einen Energiewandler aufweist. Je nach Anwendung und Anforderungen können diese Energiewandler auf verschiedenen physikalischen Prinzipien beruhen. Als besonders vorteilhaft haben sich insbesondere piezoelektrische Aktuatoren erwiesen. Aber auch Aktuatoren, die auf sogenannten Formgedächtnislegierungen oder anderen Materialien mit Gedächtnis-Effekt basieren, sowie magneto- oder elektrostriktive Aktuatoren, pneumatische oder hydraulische Aktuatoren, magneto- oder elektrorheologische Flüssigkeits-Aktuatoren und Dämpfungselemente lassen sich vorteilhaft einsetzen. Auch Kombinationen verschiedener Energiewandlersysteme sind möglich, beispielsweise die Kombination (z. B. eine Serien- oder Parallelschaltung) eines piezoelektrischen Aktuators mit einem "konventionellen" Dämpfungssystem, wie beispielsweise einem Feder-Gummidämpfer-System.

Auch Schwingungen in unterschiedlichen Frequenzbereichen lassen sich durch Kombination verschiedener Wirkprinzipien ausgleichen, also z. B. hochfrequente Schwingungen durch aktive oder passive Dämpfung mittels piezoelektrischer Aktuatoren, niederfrequente Schwingungen durch konventionelle Dämpfungselemente (z. B. viskoelastische Dämpfer).

Die Energiewandlersysteme sollen eine Vorzugsrichtung aufweisen, die häufig auch als Hauptwirkrichtung der Energiewandlersysteme bezeichnet wird. Dies kann beispielsweise dadurch erfolgen, dass mehrere Aktuatoren, z. B. piezoelektrische Aktuatoren, mit einer gemeinsamen Wirkrichtung eingesetzt werden. Dies bedeutet jedoch nicht notwendigerweise, dass die Schnittstelle lediglich einen Freiheitsgrad für die Schwingungsdämpfung aufweist. Durch ungleiche Ansteuerung bzw. Ausdehnung der einzelnen piezoelektrischen Aktuatoren kann eine Verkippung des Lastanschlusselements relativ zum Basisanschlusselement erzielt werden, wodurch sich nicht nur reine translatorische Schwingungen des Lastanschlusselements, sondern beispielsweise auch Kippschwingungen oder Drehschwingungen kontrollieren bzw. ausgleichen (insbesondere dämpfen) lassen.

Durch das Vorspannelement wird eine Vorlast auf das mindestens eine Energiewandlersystem ausgeübt. Bei dieser Vorlast kann es sich beispielsweise um eine mechanische Druck- oder Zugbelastung handeln. Wahlweise ist auch ein Betrieb mit der Vorlast Null möglich, also ein Betrieb bei dem keine vorlastbedingte Kraft auf die Energiewandlersysteme ausgeübt wird. Wahlweise kann diese Vorlast (auch die Vorlast Null) noch beispielsweise mit einer elektrischen bzw. elektromechanischen Vorlast kombiniert werden. Das Vorlastelement kann elastisch oder inelastisch sein. Die Vorlast kann direkt oder indirekt auf die Energiewandlersysteme ausgeübt werden, also beispielsweise auch indirekt über ein zusätzliches Federsystem.

Als besonders vorteilhaft hat es sich erwiesen, wenn das Vorspannelement ein das Energiewandlersystem umschließendes Rohr aufweist. Dabei kann es sich beispielsweise um ein Rohr aus einem elastischem Material, beispielsweise einem thermoplastischen Kunststoff oder einem Elastomer handeln, welches an einem Ende fest mit dem Basisanschlusselement und am anderen Ende fest mit dem Lastanschlusselement verbunden ist und beispielsweise eine Druckvorspannung auf das mindestens eine Energiewandlersystem ausübt. Das Rohr muss nicht notwendigerweise vollständig geschlossen sein, sondern kann beispielsweise auch Schlitze oder andere Öffnungen aufweisen. Der Querschnitt des Rohres kann variieren, beispielsweise kann er rund sein oder viereckig. Das Rohr schützt das Energiewandlersystem vor Umwelteinflüssen und mechanischen Belastungen. Für die Rohrwandung ist der Einsatz von isotropen und anisotropen Materialien möglich.

In vielen Fällen sind Systeme zur Schwingungskontrolle gleichzeitig hohen Belastungen z. B. durch Scherkräfte ausgesetzt. Dabei handelt es sich um Belastungen außerhalb der (insbesondere senkrecht zur) Vorzugsrichtung des Energiewandlersystems, also beispielsweise senkrecht zur Vorzugrichtung der Aktuatoren. Derartige Belastungen führen leicht zu Beschädigungen der Energiewandlersysteme, beispielsweise zum Brechen der empfindlichen piezoelektrischen Aktuatoren.

Die vorgeschlagene Schnittstelle weist daher das Schubableitungselement zum Schutz der Energiewandlersysteme auf. Dieses Schubableitungselement soll in Vorzugsrichtung des Energiewandlersystems im Arbeitsbereich der Schnittstelle eine geringe Steifigkeit, in mindestens einer Richtung senkrecht zur Vorzugsrichtung hingegen eine hohe Steifigkeit aufweisen.

Das zweidimensionale Element soll im Wesentlichen zweidimensional sein, wird aber in der Praxis stets eine gewisse Dicke aufweisen. Dies wird beispielsweise durch den Einsatz einer Membran oder Blattfeder, erreicht. Diese Membran oder Blattfeder kann eben oder auch gekrümmt sein und kann beispielsweise aus einem dünnen Federblech (z. B. mit einem Verhältnis zwischen lateraler Ausdehnung und Dicke von 100:1) bestehen und z. B. die Form eines Streifens oder einer runden oder eckigen Scheibe bzw. dünnen Platte aufweisen.

Die Ausrichtung der Membran oder Blattfeder kann genau 90° zur Vorzugsrichtung der Energiewandlersysteme betragen, kann jedoch auch leicht (vorteilhafter Weise um nicht mehr als 20°) vom rechten Winkel abweichen.

Die Membran bzw. Blattfeder soll mit dem Basisanschlusselement und dem Lastanschlusselement verbunden sein. Diese Verbindung kann entweder unmittelbar erfolgen, beispielsweise durch Verkleben, Verschrauben oder Verlöten der Membran bzw. Blattfeder mit dem Last- bzw. Basisanschlusselement, oder es können separate Verbindungselemente (z. B. Distanzstücke) zwischen Last- bzw. Basisanschlusselement und Angriffsbereichen auf der Membran oder Blattfeder eingesetzt werden. Die Verbindung muss nicht notwendigerweise starr sein, sondern kann auch beispielsweise durch eine in Vorzugsrichtung bewegliche Führung erfolgen.

Die Angriffsbereiche der Verbindungen zwischen Basisanschlusselement und Membran bzw. Blattfeder und zwischen Lastanschlusselement und Membran bzw. Blattfeder sollen jedoch nicht zusammenfallen, d. h. zumindest nicht deckungsgleich sein. Dies gewährleistet, dass vom Basisanschlusselement auf die Membran bzw. Blattfeder ausgeübte Kräfte und vom Lastanschlusselement auf die Membran bzw. Blattfeder ausgeübte Kräfte nicht im selben Bereich der Membran angreifen.

Dadurch wird gewährleistet, dass das Lastanschlusselement und das Basisanschlusselement über das Schubableitungselement in Vorzugsrichtung der Energiewandlersysteme über die flexible Membran oder Blattfeder "nachgiebig" gekoppelt sind. Senkrecht zur Vorzugsrichtung der Energiewandlersysteme erfolgt jedoch infolge der hohen Steifigkeit der Membran entlang ihrer Flächenausdehnung eine "starre" Kopplung. In anderen Worten, um den Abstand zwischen dem Lastanschlusselement und dem Basisanschlusselement zu verringern bzw. zu vergrößern ist eine erheblich geringere Kraft erforderlich als für eine Scherung (Parallelbewegung) des Lastanschlusselements relativ zum Basisanschlusselement. Aufgrund der Flexibilität (geringen Federkonstante) der Membran senkrecht zu ihrer Flächenausdehnung ist eine Veränderung des Abstandes des Lastanschlusselements relativ zum Basisanschlusselement leicht, d. h. ohne größeren Kraftaufwand, möglich. Eine Querbewegung (Scherung) parallel zur Flächenausdehnung der Membran ist jedoch auf Grund der hohen Steifigkeit der Membran bzw. Blattfeder entlang ihrer Flächenausdehnung nur mit erheblichem Kraftaufwand möglich (hohe Federkonstante). Die Energiewandlersysteme können also ihre Wirkung entlang ihrer Vorzugsrichtung optimal entfalten und Schwingungen in dieser Richtung kontrollieren, insbesondere dämpfen, sind jedoch senkrecht zu dieser Richtung durch die Membran oder Blattfeder des Schubableitungselements vor mechanischen Belastungen geschützt. Gleichzeitig wird durch das Schubableitungselement infolge der geringen Steifigkeit der Membran bzw. Blattfeder in Vorzugsrichtung der Energiewandlersysteme kein ausgeprägter neuer Lastpfad eröffnet, also eine steife mechanische Verbindung, über die sich Störungen (zum Beispiel Vibrationen) vom Basisanschlusselement zum Lastanschlusselement fortpflanzen.

In einer vorteilhaften konstruktiven Ausgestaltung der Schnittstelle kann das Schubableitungselement gleichzeitig genutzt werden, um eine Vorlast auf das bzw. die Energiewandlersysteme auszuüben. Das Schubableitungselement ist also in diesem Fall identisch mit dem Vorspannelement bzw. ist ein Teil des Vorspannelements oder umgekehrt. Dies kann zu einer Verringerung der Teilezahl und somit zu einer Reduzierung des Gewichts und der Herstellungskosten der Schnittstelle führen.

In vielen Fällen werden, wie oben erwähnt, Schnittstellen nicht nur zur Schwingungskontrolle, sondern gleichzeitig auch als Stellglieder zur mechanischen Positionierung von Lasten verwendet. In diesem Fall spielt der maximale Hub der Schnittstelle, also beispielsweise die maximale relative Abstandsänderung zwischen Basisanschlusselement und Lastanschlusselement, eine große Rolle. In der Regel ist es jedoch so, dass die relative Längenänderung von Energiewandlersystemen, insbesondere von piezoelektrischen Aktuatoren, von der Baulänge abhängt. Um einen großen Hub zu erzielen, sind also Energiewandlersysteme mit großer Baulänge erforderlich, was wiederum jedoch zu einer hohen Gesamtgröße der Schnittstelle führt.

In einer weiteren vorteilhaften Ausgestaltung der Erfindung weist daher das Energiewandlersystem mindestens zwei Teilsysteme auf, wobei die einzelnen Teilsysteme "überlappend" angeordnet sind. Zu diesem Zweck wird zwischen das Basisanschlusselement und das Lastanschlusselement ein Koppelelement eingeführt. Ein erstes Teilsystem erstreckt sich zwischen dem Basisanschlusselement und dem Koppelelement, ein zweites Teilsystem zwischen dem Koppelelement und dem Lastanschlusselement. Das Koppelelement kann dabei uneben ausgestaltet sein, so dass sich die einzelnen Teilsysteme in ihrer Vorzugsrichtung teilweise überlappen. Auf diese Weise lässt sich die Baugröße der Schnittstelle reduzieren, ohne dass der Hub der Schnittstelle dadurch verringert würde. Dieses Prinzip des Koppelelements lässt sich vorteilhaft auch fortsetzen, in dem beispielsweise zwei Koppelelemente und drei einzelne Teilsysteme eingesetzt werden usw.. Wiederum sollen die Teilsysteme überlappend angeordnet sein, so dass sich der Gesamthub der Schnittstelle vergrößert, ohne dass die Baulänge signifikant erhöht wird.

Vorteilhafter Weise wird die Position des Koppelements relativ zu einer Achse parallel zur Vorzugsrichtung des Energiewandlersystems fixiert. Dies kann durch ein zusätzliches Zentrierelement erfolgen. Dabei kann es sich beispielsweise um eine weitere Membran handeln, welche senkrecht zur Vorzugsrichtung ausgerichtet ist und in verschiedenen Angriffsbereichen mit dem Basisanschlusselement oder dem Lastanschlusselement verbunden ist. Dieses Zentrierelement verhindert, dass das Koppelelement seine Lage (beispielsweise infolge mechanischer Fertigungstoleranzen) senkrecht zur Vorzugsrichtung des Energiewandlersystems ändert und dadurch eine Schubkraft auf das Energiewandlersystem ausübt.

Die beschriebene Schnittstelle in einer ihrer Ausgestaltungen lässt sich weiterhin mit einer elektronischen Schaltung zur aktiven, passiven oder semi-aktiven bzw. semi-passiven Schwingungsreduktion versehen. Dies kann auf verschiedene Weisen erfolgen.

Für eine aktive Schwingungskontrolle werden vorteilhafter Weise Aktuatoren als Energiewandlersysteme eingesetzt. Es können ein oder mehrere Sensoren mit der Schnittstelle (beispielsweise mit dem Lastanschlusselement) verbunden sein. Dabei kann es sich um Sensoren zur Bestimmung von beispielsweise Weg, Geschwindigkeit, Beschleunigung oder Kraft handeln, insbesondere um kapazitive oder piezoelektrische Beschleunigungs- oder Kraftsensoren, oder um magnetische, elektrostatische oder interferometrische Positions- oder Geschwindigkeitssensoren.

Die Signale der Sensoren werden beispielsweise einer Regelungselektronik zur Verfügung gestellt. Die Regelungselektronik generiert aus den Sensorsignalen Steuersignale (Zielfunktion), welche über eine Energieversorgung in Stellsignale für die Aktuator-Systeme umgewandelt werden können. Durch diese Stellsignale werden die Aktuator-Systeme zu Schwingungen angeregt, welche z. B. gegenphasig zu den zu isolierenden Schwingungen sind und diese am Ort der Last eliminieren oder dämpfen.

Für eine passive oder semi-aktive bzw. semi-passive Schwingungsreduktion können beispielsweise Energiewandlersysteme eingesetzt werden, welche ganz oder teilweise so ausgestaltet sind, dass sie mechanische in elektrische Energie umwandeln. Diese elektrische Energie wird dann mit Hilfe einer elektronischen Schaltung dissipiert oder anderweitig verwertet. Im einfachsten Fall besteht diese elektronische Schaltung aus einem ohmschen Widerstand, in dem die elektrische Energie zumindest teilweise in Form von Wärme dissipiert wird.

Eine noch effizientere Schwingungsdämpfung lässt sich durch den zusätzlichen Einsatz einer oder mehrerer Spulen und/oder eines oder mehrerer Kondensatoren (gedämpfter elektrischer Schwingkreis) oder sogenannter "synthetischer Induktivitäten" erzielen. Synthetische Induktivitäten bestehen i. d. R. aus einer Kombination mehrerer ohmscher Widerstände mit einem oder mehreren Operationsverstärkern. Auf diese Weise lassen sich höhere Induktivitäten erzielen als mit herkömmlichen Spulen. Dadurch wird die Dämpfung des Schwingkreises weiter erhöht. Diese Technik wird beispielsweise in D. Mayer, Ch. Linz, und V. Krajenski: *Synthetische Induktivitäten für die semi-passive Dämpfung,* 5. Magdeburger Maschinenbautage, 2001, beschrieben.

Die Effizienz der Schwingungsdämpfung lässt sich weiter erhöhen, indem mehrere der oben beschriebenen Schnittstellen in einer der beschriebenen Ausgestaltungen und Beschaltungen in Kaskaden hintereinandergeschaltet werden. Dabei wird jeweils das Basisanschlusselement der folgenden Schnittstelle mit dem Lastanschlusselement der vorhergehenden Schnittstelle verbunden. Dies kann so erfolgen, dass die Vorzugsrichtungen der nachfolgenden Schnittstellen parallel zur Vorzugsrichtung der jeweils vorhergehenden Schnittstelle ausgerichtet sind. Es sind jedoch auch Ausrichtungen senkrecht zur Vorzugsrichtung oder in anderen Raumrichtungen möglich. Zu diesem Zweck kann beispielsweise jeweils auf dem Lastanschlusselement einer Schnittstelle ein rechteckiger Montagewinkel befestigt werden, auf welchem wiederum das Basisanschlusselement einer nachfolgenden zweiten Schnittstelle befestigt werden kann. Auf diese Weise lassen sich beispielsweise Schwingungen in verschiedenen Raumrichtungen kontrollieren.

Im Folgenden wird die Erfindung anhand von Ausführungsbeispielen näher erläutert, die in den Figuren schematisch dargestellt sind. Die Erfindung ist jedoch nicht auf die Beispiele beschränkt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine Seitenansicht einer ersten Ausführungsform einer Schnittstelle zum Dämpfen mechanischer Schwingungen mit einem einzelnen piezoelektrischen Aktuatorsystem und einer Membran zur Schubableitung;
- Fig. 2: eine Prinzipskizze zur Einwirkung von Kräften parallel und senkrecht zur Vorzugsrichtung der Energiewandler- systeme auf eine Membran;
- Fig. 3: eine Seitenansicht einer zweiten Ausführungsform einer Schnittstelle zum Dämpfen mechanischer Schwingungen mit zwei einzelnen piezoelektrischen Aktuatorsystemen und einer Membran zur Schubableitung;
- Fig. 4: eine Explosionsdarstellung der in Fig. 3 dargestellten Schnittstelle; und
- Fig. 5: eine dritte Ausführungsform einer Schnittstelle mit einer Membran zur Schubableitung in perspektivischer Teildarstellung mit ausgeschnittenem Segment.

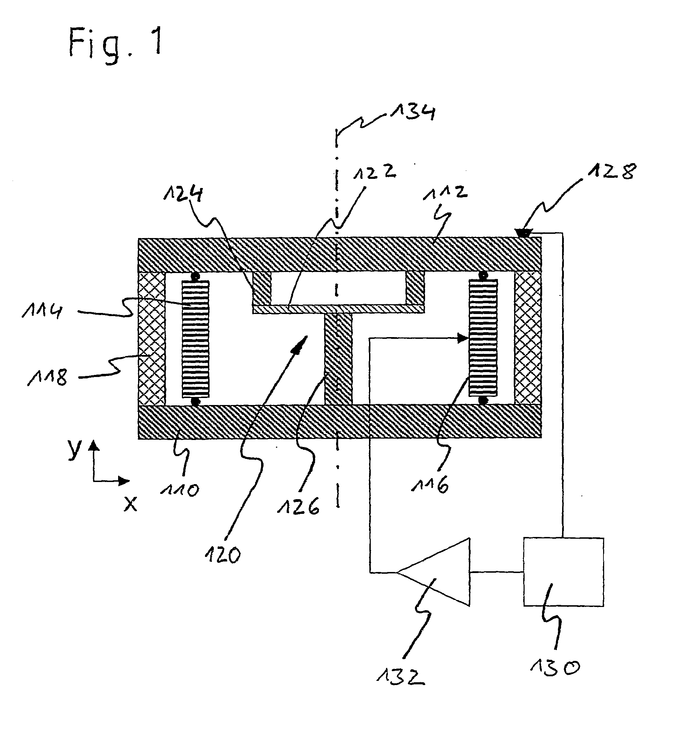

Fig. 1 zeigt eine erste Ausführungsform einer Schnittstelle zum Kontrollieren (insbesondere Dämpfen) mechanischer Schwingungen mit zylindrischem Querschnitt. Die Schnittstelle weist ein Basisanschlusselement 110 und ein Lastanschlusselement 112, beide in Form einer flachen runden Scheibe, auf. Zwischen dem Basisanschlusselement 110 und dem Lastanschlusselement 112 erstreckt sich ein piezoelektrisches Aktuatorsystem 114, 116. Das Basisanschlusselement 110 und das Lastanschlusselement 112 sind durch ein rohrförmiges Vorspannelement 118 aus PVC verbunden, welches einen Druck (Vorlast) auf das piezoelektrische Aktuatorsystem 114, 116 ausgeübt. Weiterhin ist das Basisanschlusselement 110 mit dem Lastanschlusselement 112 durch ein Schubableitungselement 120 verbunden. Das Schubableitungselement 120 weist eine Membran 122 in Form einer kreisförmigen, dünnen, aus Federblech gearbeiteten Scheibe auf. Entlang ihrem Umfang ist diese Membran 122 durch ein kreisringförmiges Verbindungselement 124 mit dem Lastanschlusselement 112 verbunden. Die Mitte der Membran 122 ist über einen zweites, zylinderförmiges Verbindungselement 126 mit hohem Schubmodul bei Scherung in Richtung senkrecht zur y-Achse mit dem Basisanschlusselement 110 verbunden.

Durch das beschriebene Schubableitungselement 120 wird das piezoelektrische Aktuatorsystem 114, 116 vor Krafteinwirkungen senkrecht zu seiner Vorzugsrichtung (y-Richtung in Fig. 1) geschützt. Die Membran 122 weist in y Richtung eine hohe Flexibilität auf, senkrecht dazu (beispielsweise in x-Richtung) hingegen eine hohe Steifigkeit.

Die piezoelektrischen Aktuatoren 114, 116 werden durch das Vorspannelement 118 unter ständiger Vorspannung gehalten, welche so eingestellt ist, dass die piezoelektrischen Aktuatoren 114, 116 je nach Bauart optimal arbeiten und vor Bruchdehnung geschützt sind. Das Vorspannelements 118 ist rohrförmig ausgestaltet und umschließt das piezoelektrische Aktuatorsystem 114, 116 vollständig, wodurch keine Feuchtigkeit oder Schmutz an das piezoelektrische Aktuatorsystem 114, 116 gelangen kann. Weiterhin ist das piezoelektrische Aktuatorsystem 114, 116 gegen direkte mechanische Einwirkungen, beispielsweise gegen Schläge, geschützt.

Alternativ kann jedoch auch auf das rohrförmige Vorspannelement 118 verzichtet werden. In diesem Fall (nicht dargestellt) übernimmt das Schubableitungselement 120 gleichzeitig die Aufgabe der Vorspannung der piezoelektrischen Aktuatoren 114, 116. Die Länge des Verbindungselements 126 wird dann so eingestellt (beispielsweise durch entsprechendes Verkürzen), dass die Länge des Schubableitungselements 120 im Ruhezustand geringer ist als die Länge der piezoelektrischen Aktuatoren 114, 116. Dadurch wird ein Druck auf die piezoelektrischen Aktuatoren 114, 116 ausgeübt.

Die in Fig. 1 dargestellte Anordnung ist sehr gut geeignet, Schwingungen des Basisanschlusselements 110 in y-Richtung (beispielsweise verursacht durch eine basisseitige Störquelle) vom Lastanschlusselement 112 zu isolieren. Zu diesem Zweck lässt sich beispielsweise das Prinzip der aktiven Schwingungsminderung einsetzen, welches in Fig. 1 stark vereinfacht dargestellt ist: Ein Beschleunigungssensor 128 auf dem Lastanschlusselement 112 ist mit einer (schematisch dargestellten) Regelelektronik 130 verbunden, welche ein vom Beschleunigungssensor 128 erzeugtes Schwingungssignal in ein Regelsignal für das piezoelektrische Aktuatorsystem 114, 116 umwandelt. Dieses Regelsignal wird anschließend durch eine Verstärkerelektronik 132 in ein entsprechendes Spannungssignal umgewandelt und dem piezoelektrischen Aktuatorsystem 114, 116 zugeführt. Auf diese Weise können durch das piezoelektrische Aktuatorsystem 114, 116 im Lastanschlusselement 112 Schwingungen erzeugt werden, welche sich mit den vom Basisanschlusselement 110 übertragenen Schwingungen destruktiv überlagern und die Schwingungen des Lastanschlusselements insgesamt im Idealfall eliminieren.

Werden mehrere Beschleunigungssensoren 128 eingesetzt, so lassen sich in ähnlicher Weise beispielsweise auch Kippschwingungen eliminieren. Zu diesem Zweck ist es erforderlich, dass die piezoelektrischen Aktuatoren 114, 116 elektrisch unterschiedlich angesteuert werden und sich somit unterschiedlich ausdehnen. Das Lastanschlusselement 112 wird dann relativ zum Basisanschlusselement 110 verkippt und kann bei entsprechender Ansteuerung eine Kippschwingung ausführen, welche z. B. eine gegenphasige Kippschwingung des Basisanschlusselements 110 eliminiert. Entsprechend lassen sich, wenn weitere piezoelektrische Aktuatoren ringförmig um eine Symmetrieachse 134 angeordnet sind, Drehschwingungen bzw. Taumelbewegungen eliminieren.

In einer alternativen Ausführungsform (nicht dargestellt) kann auch die Spannung zwischen entgegengesetzten Enden eines piezoelektrischen Aktuators 114, 116 abgegriffen und zur passiven Schwingungsdämpfung genutzt werden. Schwingt das Lastanschlusselement 112 relativ zum Basisanschlusselement 110, so wandelt der piezoelektrische Aktuator die mechanische Schwingungsenergie in ein elektrisches Spannungssignal um, und die Spannung zwischen den entgegengesetzten Enden des piezoelektrischen Aktuators 114, 116 variiert periodisch. Führt man diese Spannung einem gedämpften elektrischen Schwingkreis zu, so wird die elektrische Schwingung gedämpft, und dem System wird Energie entzogen. Dadurch wird die Schwingung zwischen dem Lastanschlusselement 112 und dem Basisanschlusselement 110 gedämpft. In entsprechender Weise kann die elektrische Energie durch geeignete elektrische Beschaltungen zur Energierückgewinnung, beispielsweise zum Laden eines elektrischen Energiespeichers, verwendet werden.

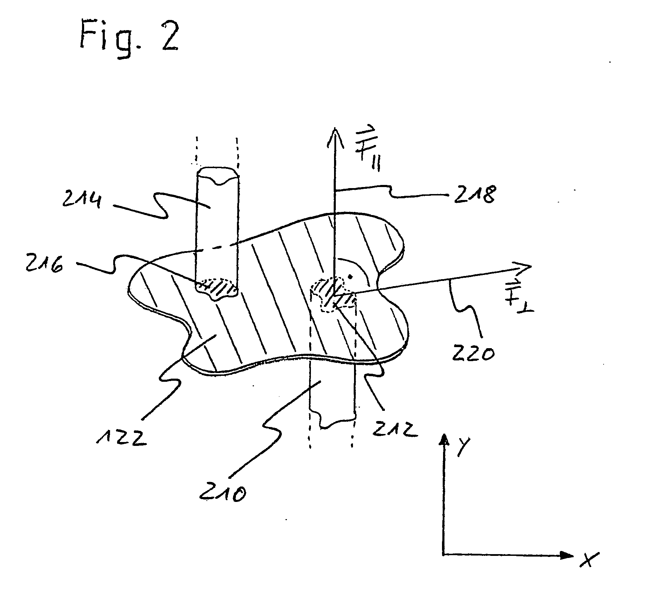

In Fig. 2 ist in einer Prinzipskizze die Wirkungsweise einer Membran 122 zur Ableitung kritischer mechanischer Lasten von den Aktuatoren dargestellt. Die Membran ist über ein Verbindungselement 210, welches in einem Angriffsbereich 212 an der Membran 122 angreift, mit dem Basisanschlusselement (in Fig. 2 nicht dargestellt) einer Schnittstelle verbunden. Analog ist die Membran 122 über ein Verbindungselement 214, welches in einem Angriffsbereich 216 an der Membran 122 angreift, mit dem Lastanschlusselement (ebenfalls in Fig. 2 nicht dargestellt) der Schnittstelle verbunden. Die Angriffsbereiche 212 und 216 sind räumlich voneinander getrennt.

Die Membran 122 ist senkrecht zur Vorzugsrichtung eines (ebenfalls in Fig. 2 nicht dargestellten) Energiewandlersystems angeordnet. In Fig. 2 wird diese Vorzugsrichtung als y-Richtung bezeichnet. Erfolgt über das Verbindungselement 210 zum Basisanschlusselement eine Krafteinwirkung mit einer Kraft 218 (durch einen Pfeil symbolisiert) in Vorzugsrichtung auf den Angriffsbereich 212 der Membran 122, so wird dieser Angriffsbereich 212 infolge der hohen Flexibilität der Membran 122 senkrecht zu ihrer Flächenausdehnung leicht in y-Richtung relativ zum Angriffsbereich 216 des Lastanschlusselements verschoben. Erfolgt jedoch eine Krafteinwirkung durch eine Kraft 220 in einer Ebene senkrecht zur Vorzugsrichtung (beispielsweise in x-Richtung), so setzt die Membran 122 dieser Krafteinwirkung einen hohen mechanischen Widerstand entgegen. Der Angriffsbereich 212 des Basisanschlusselements wird daher relativ zum Angriffsbereich 216 des Lastanschlusselements nur unwesentlich verschoben.

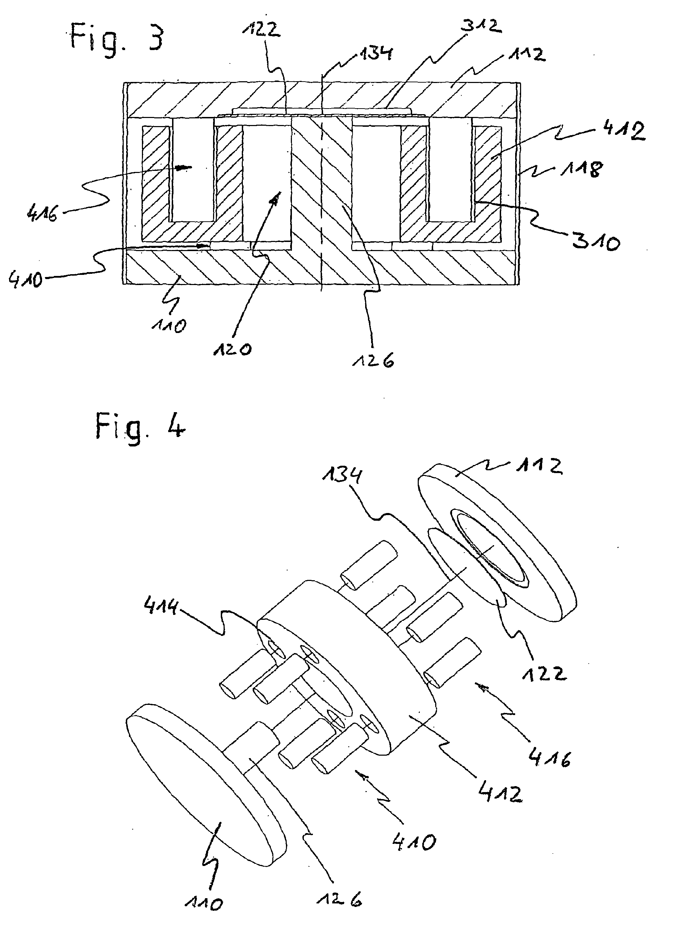

In Fig. 3 (Schnittdarstellung) und Fig. 4 (Explosionsdarstellung) ist eine zylinderförmige Schnittstelle entsprechend einem bevorzugten, zu Fig. 1 alternativen, Ausführungsbeispiel dargestellt. Die Schnittstelle weist ein Basisanschlusselement 110, ein Lastanschlusselement 112, ein rohrförmiges Vorspannelement 118 (in Fig. 4 nicht dargestellt) und ein Schubableitungselement 120 mit einem zylinderförmigen Verbindungselement 126 und einer kreisförmigen Metallmembran 122 auf. Die Funktionsweise der Schubableitung ist identisch zu der in Fig. 1 dargestellten Ausführungsform.

In diesem Ausführungsbeispiel ist jedoch das piezoelektrische Aktuatorsystem zweigeteilt: Ein aus vier ringförmig um die Symmetrieachse 134 angeordneten Aktuatoren bestehendes erstes piezoelektrisches Aktuatorsystem 410 erstreckt sich zwischen dem Basisanschlusselement 110 und einem zwischen dem Basisanschlusselement 110 und dem Lastanschlusselement 112 angeordneten Koppelelement 412. Dieses Koppelelement 412 ist in Form eines Kreisrings ausgestaltet. In die untere, flache Seite des Koppelelements 412 sind vier entsprechende, zum Basisanschlusselement 110 hin offene Sacklochbohrungen 414 eingelassen, in welche die piezoelektrischen Aktuatoren des ersten piezoelektrischen Aktuatorsystems 410 eingeführt werden.

Ein zweites piezoelektrisches Aktuatorsystem 416 erstreckt sich entsprechend zwischen dem Lastanschlusselement 112 und dem Koppelelement 412. Wiederum besteht das zweite piezoelektrisches Aktuatorsystem 416 aus vier einzelnen piezoelektrischen Aktuatoren, welche symmetrisch um die Symmetrieachse 134 angeordnet sind, wobei das piezoelektrische Aktuatorsystem 416 relativ zur Anordnung des piezoelektrischen Aktuatorsystems 410 um 45° gedreht ist. Auch das zweite piezoelektrische Aktuatorsystem 416 ist teilweise eingeführt in entsprechende, zum Lastanschlusselement 112 hin geöffnete Sacklochbohrungen 310 in der oberen, ebenen Fläche des Koppelelements 412.

Da die Sacklochbohrungen 310 und 414 jeweils um 45 Grad verdreht angeordnet sind, überlappen das erste und das zweite piezoelektrische Aktuatorsystem 410, 416. Der Abstand zwischen Basisanschlusselement 110 und Lastanschlusselement 112 ist also geringer als die Summe der Baulänge eines piezoelektrischen Aktuators des ersten piezoelektrischen Aktuatorsystems 410 und der Baulänge eines piezoelektrischen Aktuators des zweiten piezoelektrischen Aktuatorsystems 416. Dies bewirkt, dass der Hub der Schnittstelle bei gleichbleibendem Abstand zwischen Basisanschlusselement 110 und Lastanschlusselement 112 vergrößert ist im Vergleich zu einer Schnittstelle ohne Koppelelement 412.

Die Fixierung der Membran 122 am Lastanschlusselement 112 erfolgt in diesem Ausführungsbeispiel ähnlich zu dem in Fig. 1 gezeigten Beispiel, wobei jedoch auf das kreisringförmige Verbindungselement 124 verzichtet wurde. Stattdessen ist in das Lastanschlusselement 112 eine flache, zylindrische Einfräsung 312 eingelassen, über der die Membran 122 aufgespannt ist. Die Membran 122 ist entlang ihrem Rand mit dem Lastanschlusselement 112 verklebt.

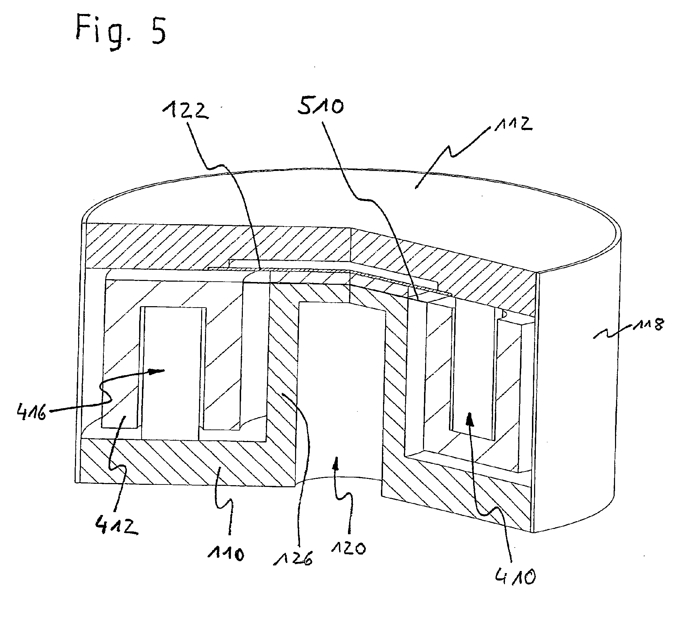

In Fig. 5 ist eine weitere alternative Ausgestaltung einer Schnittstelle zur Schwingungsdämpfung in perspektivischer Teildarstellung mit ausgeschnittenem Segment dargestellt. Der Aufbau ist grundsätzlich ähnlich zu dem in Fig. 3 und Fig. 4 dargestellten Beispiel. Jedoch ist in dieser Ausführung das Verbindungselement 126 des Schubableitungselements 120 als Hohlzylinder ausgeführt. Dies bewirkt eine weitere Raumersparnis, da sich im Hohlraum des Verbindungselements 126 beispielsweise eine Regelelektronik (z. B. für eine aktive Schwingungskontrolle) unterbringen lässt. Die Membran 122 zur Schubableitung ist mittig mit dem Verbindungselement 126 verschraubt.

Weiterhin ist in Fig. 5 ein Zentrierelement 510 in Form einer weiteren kreisförmigen Metallmembran dargestellt. Entlang ihrem Umfang ist diese Membran mit dem kreisringförmigen Koppelelement 412 verklebt. In ihrer Mitte ist die Membran 510 mit dem Verbindungselement 126 zum Basisanschlusselement 110 verschraubt. Die Membran verhindert eine Lageänderung des Koppelelements 412 gegenüber dem Verbindungselement 126 senkrecht zur Vorzugsrichtung, erlaubt jedoch eine Verschiebung des Koppelelements 412 in Vorzugsrichtung.

### Bezugszeichen

- 110: Basisanschlusselement
- 112: Lastanschlusselement
- 114: piezoelektrischer Aktuator
- 116: piezoelektrischer Aktuator
- 118: Vorspannelement
- 120: Schubableitungselement
- 122: Membran
- 124: Verbindungselement
- 126: Verbindungselement
- 128: Beschleunigungssensor
- 130: Regelelektronik
- 132: Verstärkerelektronik
- 134: Symmetrieachse
- 210: Verbindungselement zum Basisanschlusselement 110
- 212: Angriffsbereich des Basisanschlusselements 110
- 214: Verbindungselement zum Lastanschlusselement 112
- 216: Angriffsbereich des Lastanschlusselements 112
- 218: Kraft parallel zur Vorzugsrichtung des Energiewandlersys- tems
- 220: Kraft senkrecht zur Vorzugsrichtung des Energiewandlersys- tems
- 310: Sacklochbohrungen
- 312: zylindrische Einfräsung
- 410: erstes piezoelektrisches Aktuatorsystem
- 412: Koppelelement
- 414: Sacklochbohrungen
- 416: zweites piezoelektrisches Aktuatorsystem
- 510: Zentrierelement

### Liste der zitierten Literatur:

US 5,660,255
DE 195 27 514 C2
N.W. Hagood und A. von Flotow: Damping of Structural Vibrations with Piezoelectric Materials and Passive Electrical Networks, Journal of Sound and Vibration 146 (2), 243 (1991).
D. Mayer, Ch. Linz, und V. Krajenski: Synthetische Induktivitäten für die semi-passive Dämpfung, 5. Magdeburger Maschinenbautage, 2001.

## Patentansprüche

1. Schnittstelle zum Kontrollieren, insbesondere zum Dämpfen, mechanischer Schwingungen, mit
a) einem Basisanschlusselement (110);
b) einem Lastanschlusselement (112);
c) mindestens einem sich zwischen dem Basisanschlusselement (110) und dem Lastanschlusselement (112) erstreckenden als Aktuator-System ausgebildetes Energiewandlersystem (114, 116; 410, 416);
c1) wobei das als Aktuator-System ausgebildetes Energiewandlersystem (114, 116; 410, 416) eine Vorzugsrichtung aufweist;
d) mindestens einem sich zwischen dem Basisanschlusselement (110) und dem Lastanschlusselement (112) erstreckenden elastischen Vorspannelement (118);
d1) wobei das elastische Vorspannelement (118) eine mechanische Vorlast auf das als Aktuator-System ausgebildetes Energiewandlersystem (114, 116; 410, 416) ausübt;
e) mindestens einem sich zwischen dem Basisanschlusselement (110) und dem Lastanschlusselement (112) erstreckenden Schubableitungselement (120) ; **dadurch gekennzeichnet, daß**
d2) wobei das Vorspannelement (118) als elastisches Rohr ausgebildet ist, welches das mindestens eine als Aktuator-System ausgebildetes Energiewandlersystem (114, 116; 410, 416) umschließt;
e1) wobei das Schubableitungselement ein rechtwinklig zur Vorzugsrichtung angeordnetes zweidimensionales Element (122), insbesondere eine Membran oder Blattfeder, aufweist;
e2) wobei das Basisanschlusselement (110) über mindestens eine Verbindung (126; 210) mit mindestens einem ersten Angriffsbereich (212) auf dem zweidimensionalen Element (122) verbunden ist;
e3) wobei das Lastanschlusselement (112) über mindestens eine zweite Verbindung (124; 214) mit mindestens einem zweiten Angriffsbereich (216) auf dem zweidimensionalen Element (122) verbunden ist; und
e4) wobei die Angriffsbereiche (212, 216) des Basisanschlusselements (110) und des Lastanschlusselements (112) auf dem zweidimensionalen Element (122) nicht zusammenfallen.

2. Schnittstelle nach einem der vorhergehenden Ansprüche, **dadurch gekennzeichnet,**
**dass** die Funktion des Vorspannelements (118) zusätzlich durch das Schubableitungselement (120) übernommen wird.

3. Schnittstelle nach einem der vorhergehenden Ansprüche, **dadurch gekennzeichnet,**
**dass** das mindestens eine Energiewandlersystem (114, 116; 410, 416) mindestens einen piezoelektrischen und/oder magnetostriktiven und/oder elektrostriktiven Aktuator aufweist.

4. Schnittstelle nach einem der vorhergehenden Ansprüche, **dadurch gekennzeichnet,**
**dass** das Energiewandlersystem (114, 116; 410, 416) mindestens zwei Teilsysteme (410, 416) sowie ein Koppelelement (412) aufweist;
- wobei sich mindestens ein erstes Teilsystem (410) zwischen dem Basisanschlusselement (110) und dem Koppelelement (412) erstreckt; und
- wobei sich mindestens ein zweites Teilsystem (416) zwischen dem Koppelelement (412) und dem Lastanschlusselement (112) erstreckt.

5. Schnittstelle nach dem vorhergehenden Anspruch, **dadurch gekennzeichnet,**
**dass** die Teilsysteme (410, 416) sich in der Vorzugsrichtung des Energiewandlersystems überlappen.

6. Schnittstelle nach einem der beiden vorhergehenden Ansprüche,
**dadurch gekennzeichnet,**
**dass** das Koppelelement (412) durch ein Zentrierelement (510) relativ zu einer Achse parallel zur Vorzugsrichtung des Energiewandlersystems (114, 116; 410, 416) fixiert wird.

7. Anordnung zum Dämpfen mechanischer Schwingungen, **gekennzeichnet durch,**
- eine Schnittstelle nach einem der vorhergehenden Ansprüche;
- eine elektronische Schaltung (128, 130, 132) zur aktiven, passiven oder semi-aktiven bzw. semi-passiven Schwingungsreduktion.

8. Anordnung zum Dämpfen mechanischer Schwingungen mit mehreren in Serie und/oder parallel geschalteten Schnittstellen nach einem der Ansprüche 1 bis 6 und/oder einer Anordnung nach Anspruch 7.

## Claims

1. An interface for controlling, particularly for damping, mechanical vibrations, comprising
a) a base connection element (110);
b) a load connection element (112);
c) at least one energy converting system, designed as an actuator system, (114, 116; 410, 416) extending between the base connection element (110) and the load connection element (112);
c1) where the energy converting system, designed as an actuator system, (114, 116; 410, 416) exhibits a preferred direction;
d) at least one elastic pretensioning element (118) extending between the base connection element (110) and the load connection element (112);
d1) wherein the elastic pretensioning element (118) exerts a mechanical preload on the energy converting system, designed as an actuator system (114, 116; 410, 416) ;
e) at least one shear diverting element (120) extending between the base connection element (110) and the load connection element (112); **characterized in that**
d2) wherein the pretensioning element (118) is constructed as an elastic tube which encloses the at least one energy converting system, designed as an actuator system (114, 116; 410, 416);
e1) wherein the shear diverting element has a two-dimensional element (122), particularly a diaphragm or leaf spring, arranged at right angles to the preferred direction;
e2) wherein the base connection element (110) is joined to at least one first area of engagement (212) on the two-dimensional element (122) via at least one connection (126; 210);
e3) wherein the load connection element (112) is joined to at least one second area of engagement (216) on the two-dimensional element (122) via at least one second connection (124; 214); and e4) wherein the areas of engagement (212, 216) of the base connection element (110) and of the load connection element (112) do not coincide on the two-dimensional element (122).

2. The interface as claimed in one of the preceding claims, **characterized in that** the operation of the pretensioning element (118) is additionally handled by the shear diverting element (120).

3. The interface as claimed in one of the preceding claims, **characterized in that** the at least one energy converting system (114, 116; 410, 416) has at least one piezoelectric and/or magnetostrictive and/or electrostrictive actuator.

4. The interface as claimed in one of the preceding claims, **characterized in that** the energy converting system (114, 116; 410, 416) has at least two subsystems (410, 416) and a coupling element (412);
- wherein at least one first subsystem (410) extends between the base connection element (110) and the coupling element (412); and
- wherein at least one second subsystem (416) extends between the coupling element (412) and the load connection element (112).

5. The interface as claimed in the preceding claim, **characterized in that** the subsystems (410, 416) overlap in the preferred direction of the energy converting system.

6. The interface as claimed in one of the two preceding claims, **characterized in that** the coupling element (412) is fixed relative to an axis parallel to the preferred direction of the energy converting system (114, 116; 410, 416) by a centering element (510).

7. An arrangement for damping mechanical vibrations, **characterized by**
- an interface as claimed in one of the preceding claims;
- an electronic circuit (128, 130, 132) for active, passive or semi-active or semi-passive vibration reduction.

8. An arrangement for damping mechanical vibrations having a number of series- and/or parallel-connected interfaces as claimed in one of claims 1 to 6 and/or an arrangement as claimed in claim 7.

## Revendications

1. Interface pour contrôler, notamment pour amortir, des vibrations mécaniques, comprenant :
a) un élément de raccordement de base (110) ;
b) un élément de raccordement de la charge (112) ;
c) au moins un système convertisseur d'énergie (114, 116 ; 410, 416) réalisé sous la forme d'un système actionneur qui s'étend entre l'élément de raccordement de base (110) et l'élément de raccordement de la charge (112) ;
c1) le système convertisseur d'énergie (114, 116 ; 410, 416) réalisé sous la forme d'un système actionneur présentant une direction préférentielle ;
d) au moins un élément de précontrainte élastique (118) qui s'étend entre l'élément de raccordement de base (110) et l'élément de raccordement de la charge (112) ;
d1) l'élément de précontrainte élastique (118) exerçant une précharge mécanique sur le système convertisseur d'énergie (114, 116 ; 410, 416) réalisé sous la forme d'un système actionneur ;
e) au moins un élément d'évacuation de la poussée (120) qui s'étend entre l'élément de raccordement de base (110) et l'élément de raccordement de la charge (112) ; **caractérisée en ce que**
d2) l'élément de précontrainte (118) est réalisé sous la forme d'un tube élastique qui entoure l'au moins un système convertisseur d'énergie (114, 116 ; 410, 416) réalisé sous la forme d'un système actionneur ;
e1) l'élément d'évacuation de la poussée présente un élément bidimensionnel (122), notamment une membrane ou un ressort à lame, qui est disposé perpendiculairement à la direction préférentielle ;
e2) l'élément de raccordement de base (110) est relié par le biais d'au moins une liaison (126 ; 210) avec au moins une première zone de préhension (212) sur l'élément bidimensionnel (122) ;
e3) l'élément de raccordement de la charge (112) est relié par le biais d'au moins une deuxième liaison (124 ; 214) avec au moins une deuxième zone de préhension (216) sur l'élément bidimensionnel (122) ; et
e4) les zones de préhension (212, 216) de l'élément de raccordement de base (110) et de l'élément de raccordement de la charge (112) sur l'élément bidimensionnel (122) ne coïncident pas.

2. Interface selon l'une des revendications précédentes, **caractérisée en ce que** la fonction de l'élément de précontrainte (118) est en plus prise en charge par l'élément d'évacuation de la poussée (120).

3. Interface selon l'une des revendications précédentes, **caractérisée en ce que** l'au moins un système convertisseur d'énergie (114, 116 ; 410, 416) comprend au moins un actionneur piézoélectrique et/ou magnétostrictif et/ou électrostrictif.

4. Interface selon l'une des revendications précédentes, **caractérisée en ce que** le système convertisseur d'énergie (114, 116 ; 410, 416) présente au moins deux systèmes partiels (410, 416) ainsi qu'un élément de couplage (412) ;
- au moins un premier système partiel (410) s'étendant entre l'élément de raccordement de base (110) et l'élément de couplage (412) ; et
- au moins un deuxième système partiel (416) s'étendant entre l'élément de couplage (412) et l'élément de raccordement de la charge (112).

5. Interface selon la revendication précédente, **caractérisée en ce que** les systèmes partiels (410, 16) se chevauchent dans la direction préférentielle du système convertisseur d'énergie.

6. Interface selon l'une des deux revendications précédentes, **caractérisée en ce que** l'élément de couplage (412) est fixé par un élément de centrage (510) par rapport à un axe parallèle à la direction préférentielle du système convertisseur d'énergie (114, 116 ; 410, 416).

7. Arrangement pour amortir des vibrations mécaniques, **caractérisé par**
- une interface selon l'une des revendications précédentes ;
- un circuit électronique (128, 130, 132) destiné à la réduction active, passive ou semi-active ou encore semi-passive des vibrations.

8. Arrangement pour amortir des vibrations mécaniques comprenant plusieurs interfaces selon l'une des revendications 1 à 6 et/ou un arrangement selon la revendication 7 branchés en série et/ou en parallèle.
